# EUROPEAN PATENT SPECIFICATION

(11) **EP 3 617 052 B1**
(45) Date of publication and mention of the grant of the patent: **03.02.2021**
(21) Application number: 18209734.5
(22) Date of filing: 03.12.2018
(51) Int. Cl.: B62L 3/02, B60T 8/36

(54) **STRADDLED VEHICLE**
GRÄTSCHSITZFAHRZEUG
VÉHICULE À ENFOURCHER

(30) Priority: 03.09.2018 JP 2018164581
(43) Date of publication of application: 04.03.2020
(73) Proprietor: YAMAHA HATSUDOKI KABUSHIKI KAISHA, Iwata-shi, Shizuoka 438-8501 (JP)
(72) Inventor: TOKITOH, Takamasa, Iwata-shi, Shizuoka 438-8501 (JP)
(74) Representative: Grünecker Patent- und Rechtsanwälte PartG mbB

(56) References cited:
- WO-A1-2014/077101
- JP-A- 2016 182 838
- US-A1- 2005 134 114

## Description

The present invention relates to a straddled vehicle.

Document WO 2014/077101 A1 shows the preamble of claim 1. Document US 2005/0134114 A1 discloses a motorcycle having an ABS unit disposed at a front end portion of a body frame and connected to a master cylinder on a grip of a handle-bar and a disc brake via brake pipes. Furthermore, in the related art, the fuel tanks of straddled vehicle, for example motorcycle, is disposed above the main frame so as to straddle the main frame (see Japanese Unexamined Patent Application Publication No. 2014-169077). An ABS unit that controls the hydraulic front wheel brake and rear wheel brake is disposed below the fuel tank and above the main frame. Specifically, in a state in which the ABS unit is disposed on the upper portion of the main frame, the top portion and both side portions of the ABS unit are covered by the fuel tank.

In this case, the front master cylinder and the ABS unit are connected to each other by an upper hydraulic pipe. The ABS unit and the front wheel brake are connected to each other by a lower hydraulic pipe. Thus, the ABS unit is disposed between the front master cylinder and the front wheel brake, and is respectively connected to the front master cylinder and the front wheel brake by the upper hydraulic pipe and the lower hydraulic pipe.

In conventional motorcycles, the top portion and both side portions of the ABS unit are covered by the fuel tank. Consequently, the fuel tank must be removed from the main frame to perform maintenance on the ABS unit. That is, in conventional motorcycles, it is difficult to directly perform maintenance on the ABS unit without removing the fuel tank.

In light of this problem, it is an object of the present invention is to provide a straddled vehicle whereby maintainability of the ABS unit can be improved. According to the present invention said object is solved by a straddled vehicle having the features of independent claim 1. Preferred embodiments are laid down in the dependent claims.

The inventor of the present invention investigated disposing the ABS unit at a position farther frontward in the vehicle than the position described in the related art so that the ABS unit is not blocked by the fuel tank, thereby improving the maintainability of the ABS unit. As a result of the investigation, it was possible to access the ABS unit without removing the fuel tank when performing maintenance on the ABS unit. Therefore, the maintainability of the ABS unit was improved.

The reason that the ABS unit is moved frontward in the vehicle instead of the rearward in the vehicle is because the seat is disposed at a position farther rearward in the vehicle than the fuel tank, and moving the ABS unit rearward in the vehicle would make it difficult to secure space for performing maintenance.

In a case in which the maintainability of the ABS unit is improved by the configuration described above, the ABS unit is disposed farther frontward in the vehicle than the position in configuration described in the related art. As such, the length of the upper hydraulic pipe that connects the front master cylinder to the ABS unit is shortened. This makes it more difficult to secure the curvature necessary for the upper hydraulic pipe to conform to the rotation of the handlebars.

Moreover, in this case, the length of the lower hydraulic pipe that connects the ABS unit to the front wheel brake is also shortened. This makes it more difficult to secure the length for the lower hydraulic pipe to conform to the stroke of the steering device and the curvature necessary for the lower hydraulic pipe to conform to the rotation of the front wheel at a time of handle operation.

Furthermore, the brake fluid flowing through the upper hydraulic pipe and the lower hydraulic pipe contains antioxidants. As such, when applying the front wheel brake, steel piping with copper plating on the inner surface is provided in a portion of the upper hydraulic pipe and/or the lower hydraulic pipe to prevent the antioxidants in the brake fluid from crystallizing. If the antioxidants crystallize, the resulting crystals (foreign matter) may become clogged in the internal piping of the ABS unit.

Accordingly, the steel pipe with the copper plating on the inner surface has to secure a sufficient length in the upper hydraulic pipe and/or the lower hydraulic pipe to prevent the antioxidants in the brake fluid from crystallizing.

However, as described above, the lengths of the upper hydraulic pipe and the lower hydraulic pipe are shortened as a result of disposing the ABS unit farther frontward in the vehicle than the position described in the related art. Consequently, it is difficult to simultaneously secure the curvatures of the upper hydraulic pipe and the lower hydraulic pipe and secure the length of the steel piping, for which it is difficult to secure curvature.

Therefore, the inventor of the present invention performed further investigation and modified the disposal of the steel piping and the routing of the upper hydraulic pipe and the lower hydraulic pipe. As a result, the inventor of the present invention discovered that it is possible to simultaneously improve the maintainability of the ABS unit, secure the curvatures of the upper hydraulic pipe and the lower hydraulic pipe, and secure the length of the steel piping, for which it is difficult to secure curvature. The configuration of an invention based on these findings is as follows:

A straddled vehicle according to an aspect disclosed herein comprises a frame portion including a head pipe disposed at a vehicle center in a vehicle width direction, a main frame extending rearward from the head pipe, and a down frame disposed downward from the main frame and extending downward from the head pipe; a steering device rotatably supported by the head pipe; a handle disposed upward from head pipe and connected to the steering device; a master cylinder supported by the handle and disposed on a first side or on a second side opposite the first side with respect to a vehicle center line that passes through the vehicle center in a vehicle plan view; a front wheel disposed downward from the head pipe and rotatably supported by the steering device; a hydraulic brake disposed on the first side or the second side of the front wheel with respect to the vehicle center line in the vehicle plan view; an engine supported by the frame portion; a fuel tank disposed upward from the main frame; an ABS unit configured to control the hydraulic brake; an upper hydraulic pipe connecting the ABS unit to the master cylinder; and a lower hydraulic pipe connecting the ABS unit to the hydraulic brake.

In this straddled vehicle, the ABS unit is disposed on a side opposite the hydraulic brake with respect to the vehicle center line in the vehicle plan view. The ABS unit is disposed downward from the main frame, rearward from the down frame, upward from a lower end of the head pipe, and upward from a head cover of the engine in a vehicle side view. The ABS unit includes a first connected portion to which the upper hydraulic pipe connects, and a second connected portion to which the lower hydraulic pipe connects.

The first connected portion and the second connected portion are provided on an upper surface of the ABS unit and disposed frontward from the fuel tank in the vehicle plan view. The upper hydraulic pipe extends frontward from the ABS unit, passes between the head pipe and the steering device on the side opposite the hydraulic brake with respect to the vehicle center line, and leads from a front of the head pipe to the master cylinder. At least a portion of the lower hydraulic pipe is configured by a metal tube member. The tube member is disposed between the ABS unit and a front edge of the down frame in the vehicle side view.

According to the straddled vehicle having the configuration described above, the ABS unit is disposed downward from the main frame, rearward from the down frame, upward from the lower end of the head pipe, and upward from the head cover of the engine in the vehicle side view. In this state, the first connected portion and the second connected portion are disposed frontward from the fuel tank on the upper surface of the ABS unit.

As a result, it is possible to access the ABS unit without removing the fuel tank. That is, with the straddled vehicle, the maintainability of the ABS unit can be improved. Additionally, the upper hydraulic pipe and the lower hydraulic pipe can easily be removed from the ABS unit. That is, with the straddled vehicle, the maintainability of the upper hydraulic pipe and the lower hydraulic pipe can simultaneously be improved. Furthermore, since the ABS unit is disposed upward from the head cover of the engine, it is possible to reduce the influence of heat transfer from the engine to the ABS unit.

Here, in a case in which the first connected portion and the second connected portion are disposed as described above, as in the related art, the distance from the first connected portion to the master cylinder and the distance from the second connected portion to the hydraulic brake may become shorter. That is, the curvature necessary for the upper hydraulic pipe to conform to the rotation of the handle may be insufficient. Additionally, the length of the lower hydraulic pipe to conform to the stroke of the steering device and the curvature necessary for the lower hydraulic pipe to conform to the rotation of the front wheel at a time of handlebar operation may be insufficient.

However, with the straddled vehicle, the upper hydraulic pipe extends frontward from the ABS unit, passes between the head pipe and the steering device on the side opposite the hydraulic brake, with respect to vehicle center line, and leads from a front of the head pipe to the master cylinder. As a result of this routing, the curvature necessary for the upper hydraulic pipe to conform to the rotation of the handle can be secured.

With the straddled vehicle, the ABS unit is disposed on the side opposite the hydraulic brake with respect to the vehicle center line in the vehicle plan view. As a result, the ABS unit can be connected to the hydraulic brake by the lower hydraulic pipe while the lower hydraulic pipe being curved. As a result of this routing, it is possible to secure the length for the lower hydraulic pipe to conform to the stroke of the steering device and the curvature necessary for the lower hydraulic pipe to conform to the rotation of the front wheel at a time of handle operation.

With the straddled vehicle, at least a portion of the lower hydraulic pipe is configured by a metal tube member. Crystallization of the brake fluid can be prevented by this metal tube member. Specifically, crystallization of the brake fluid can be prevented by reacting the brake fluid with a treatment layer (e.g., antioxidant layer) provided on the inner wall of the metal tube member. That is, with the straddled vehicle, it is possible to prevent the occurrence of foreign matter in the piping passage between the master cylinder and the hydraulic brake.

With the straddled vehicle, the metal tube member is disposed between the ABS unit and the down frame in the vehicle side view. As a result, the lower hydraulic pipe can be freely routed from the down frame to the hydraulic brake. That is, it is possible to secure the length for the lower hydraulic pipe to conform to the stroke of the steering device and the curvature necessary for the lower hydraulic pipe to conform to the rotation of the front wheel at a time of handle operation, while preventing the occurrence of the foreign matter described above.

With a straddled vehicle according to another aspect of the present invention, the ABS unit is disposed upward from a rear end of a top face of an under bracket which is provided on a lower end of the head pipe in the vehicle side view.

As a result of this configuration, the distance between the ABS unit and the hydraulic brake, that is, the length of the lower hydraulic pipe and be secured, and the length and the curvature of the metal tube member between the ABS unit and the under bracket can be sufficiently secured.

With a straddled vehicle according to another aspect of the present invention, the lower hydraulic pipe is longer than the upper hydraulic pipe.

As a result of this configuration, the length of the lower hydraulic pipe can be sufficiently secured. As a result, the curvature of the lower hydraulic pipe and the length of the metal tube member can be sufficiently secured.

With a straddled vehicle according to another aspect of the present invention, the ABS unit is disposed so as not to overlap with the fuel tank in the vehicle plan view and so as to be inward from an outer end of the fuel tank in the vehicle width direction.

As a result of this configuration, maintenance can be performed on the ABS unit in a suitable manner without removal of the fuel tank.

With a straddled vehicle according to another aspect of the present invention, the ABS unit is disposed such that a portion of the ABS unit overlaps with the fuel tank in the vehicle plan view and the ABS unit is inward from an outer end of the fuel tank in the vehicle width direction.

As a result of this configuration, maintenance can be performed on the ABS unit in a suitable manner without removal of the fuel tank.

With a straddled vehicle according to another aspect of the present invention, the ABS unit is mounted on the main frame in front of the fuel tank.

As a result of this configuration, the ABS unit can be easily removed from the main frame portion and maintenance can be performed on the ABS unit in a suitable manner.

With a straddled vehicle according to another aspect of the present invention, at least a portion of the ABS unit is disposed between the head pipe and fuel tank in the vehicle side view.

As a result of this configuration, maintenance can be performed on the ABS unit in a suitable manner without removal of the fuel tank.

With a straddled vehicle according to another aspect of the present invention, a gap which is provided between the ABS unit and the master cylinder in the vehicle width direction is larger than a gap which is provided between the ABS unit and the hydraulic brake in the vehicle width direction, in a vehicle front view.

As a result of this configuration, at a time of rotation of the handle, the upper hydraulic pipe can be curved between the ABS unit and the master cylinder without imposing a burden on the upper hydraulic pipe. That is, the curvature of the upper hydraulic pipe can be sufficiently secured.

With a straddled vehicle according to another aspect of the present invention, a gap which is provided between the ABS unit and the master cylinder in a vehicle height direction is smaller than a gap which is provided between the ABS unit and the hydraulic brake in the vehicle height direction.

As a result of this configuration, the curvature necessary for the upper hydraulic pipe to conform to the rotation of the handle can be secured and also the upper hydraulic pipe can be shortened.

With a straddled vehicle according to another aspect of the present invention, the upper hydraulic pipe is configured by a rubber tube.

In this case, at least a portion of the lower hydraulic pipe is configured by a metal tube member, and the upper hydraulic pipe is configured by the rubber tube. Thus, since steel piping is not used in the upper hydraulic pipe, the curvature of the upper hydraulic pipe can be suitable secured, even though the length of the upper hydraulic pipe is shortened.

With a straddled vehicle according to another aspect of the present invention, the upper hydraulic pipe is supported between the steering device and ABS unit by the frame portion.

In this case, the curvature necessary for the upper hydraulic pipe to conform to the rotation of the handle is secured between the support position of the upper hydraulic pipe and the master cylinder. As a result of this configuration, in a state where the upper hydraulic pipe is positioned on the frame portion, the upper hydraulic pipe can be made to conform to the rotation of the handle between the frame portion and the master cylinder.

With a straddled vehicle according to another aspect of the present invention, the lower hydraulic pipe includes the metal tube member, a first rubber tube which connects the second connected portion to the metal tube member, and a second rubber tube which connects the metal tube member to the hydraulic brake.

As a result of this configuration, the occurrence of foreign matter can be prevented by the portion of the lower hydraulic pipe, namely the metal tube member.

With a straddled vehicle according to another aspect of the present invention, the lower hydraulic pipe extends downward from the second connected portion, rearward from the ABS unit, and frontward between the ABS unit and the engine, in the vehicle side view.

As a result of this configuration, the lower hydraulic pipe can be routed from the ABS unit to the hydraulic brake along a short path, and the length of the lower hydraulic pipe can be shortened.

With a straddled vehicle according to another aspect of the present invention, the frame portion further includes a cross member which connects the main frame to the down frame.

As a result of this configuration, the rigidity of the frame portion can be improved.

With the present invention, the maintainability of the ABS unit in the straddled vehicle can be improved. Additionally, with the present invention, the upper hydraulic pipe and the lower hydraulic pipe can be suitably routed. Furthermore, with the present invention, the occurrence of foreign matter can be prevented while securing the curvature of the piping passage between the master cylinder and the hydraulic brake.

### BRIEF DESCRIPTION OF THE DRAWINGS

FIG. 1 is a left side view of a straddled vehicle utilized in an embodiment of the present invention;
FIG. 2 is a left side view illustrating a characteristic configuration of the straddled vehicle of FIG. 1;
FIG. 3 is a plan view (top view) of the configuration illustrated in FIG. 2;
FIG. 4 is a front view (front view) of the configuration illustrated in FIG. 2;
FIG. 5 is a right side view of the configuration illustrated in FIG. 2;
FIG. 6A is a partially enlarged perspective view of the configuration illustrated in FIG. 2;
FIG. 6B is a partially enlarged perspective view of the configuration illustrated in FIG. 2 (connection members are omitted); and
FIG. 7 is a partially enlarged plan view of the configuration illustrated in FIG. 2.

### DETAILED DESCRIPTION OF THE PREFERRED EMBODIMENTS

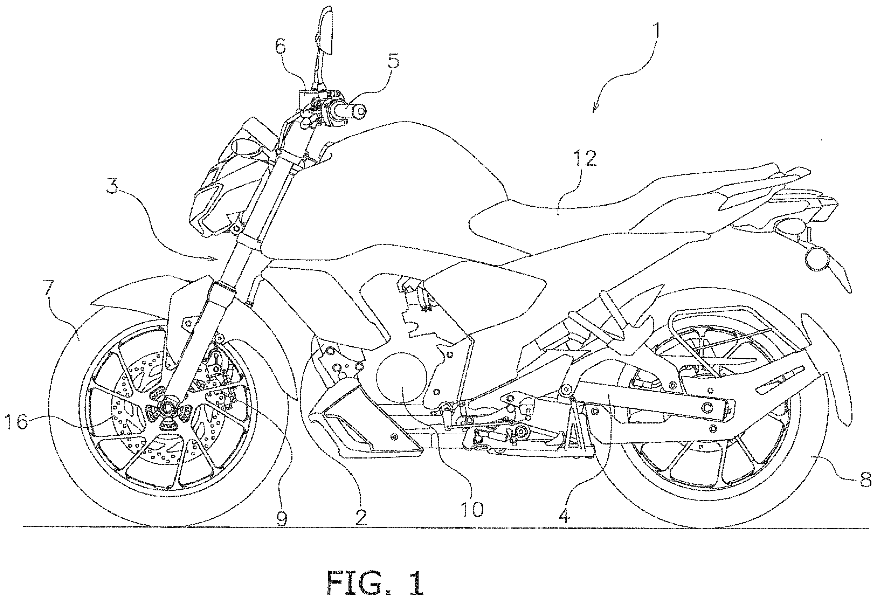

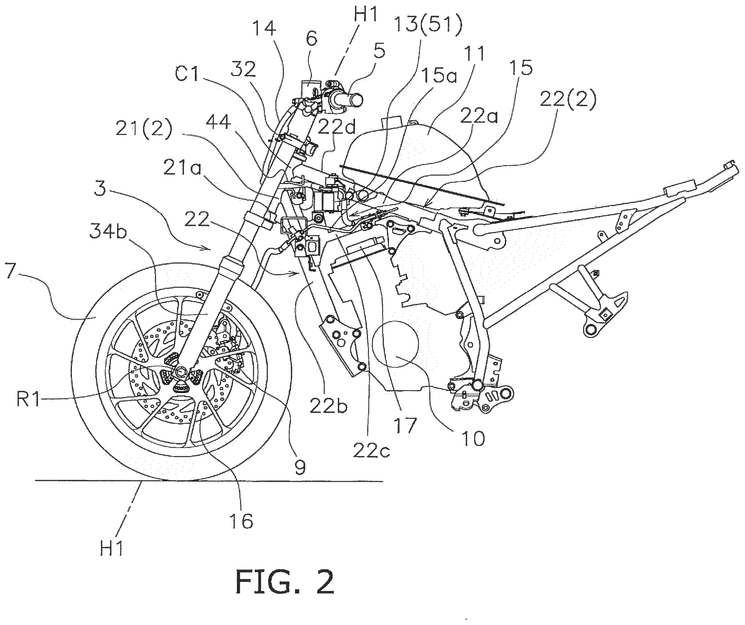

As illustrated in FIG. 1, a straddled vehicle 1 according to the present embodiment includes a frame portion 2, a steering device 3, a handle 5, a master cylinder 6, a front wheel 7, a hydraulic brake 9, an engine 10, a fuel tank 11 (see FIG. 2), an ABS unit 13 (see FIG. 2), an upper hydraulic pipe 14 (see FIG. 2), and a lower hydraulic pipe 15 (see FIG. 2).

Specifically, the straddled vehicle 1 includes the frame portion 2, the steering device 3, a swing arm 4, the handle 5, the master cylinder 6, the front wheel 7, a rear wheel 8, the hydraulic brake 9, the engine 10, the fuel tank 11 (see FIG. 2), a seat 12, the ABS unit 13 (see FIG. 2), the upper hydraulic pipe 14 (see FIG. 2), and the lower hydraulic pipe 15 (see FIG. 2).

Note that, in the present description, the direction that the straddled vehicle 1 advances (advancing direction) is defined as "frontward", and the direction opposite the advancing direction is defined as "rearward." Additionally, the direction in which gravity acts is defined as "downward" and the direction opposite downward is defined as "upward." Moreover, in a state in which a driver is seated on the seat 12, the right hand side of the driver is defined as "rightward" and the left hand side of the driver is defined as "leftward." In the following description, the up-down direction corresponds to the vehicle height direction, and the left-right direction corresponds to the vehicle width direction.

The phrase "extending in the front-back direction (frontward and/or rearward)" encompasses the meanings of "extending orthogonal to the up-down direction and the left-right direction" and "extending inclined at a predetermined angle with respect to the up-down direction and/or the left-right direction."

Specifically, the phrase "extending in the front-back direction" encompasses the meanings of "extending in the front-back direction so as to be orthogonal to the up-down direction and the left- right direction" and "extending in the front-back direction such that the smaller angle of the angles formed with the up-down direction or the smaller angle of the angles formed with the left-right direction is in a range from 45 degrees to less than 90°." Note that the phrases "extending in the up- down direction" and "extending in the left-right direction" shall be interpreted in the same manner as the phrase "extending in the front-back direction."

A view of the straddled vehicle 1 from the front is defined as a "vehicle front view." A view of the straddled vehicle 1 from above is defined as a "vehicle plan view." A view of the straddled vehicle 1 from the right side or the left side is defined as a "vehicle side view."

Furthermore, the term "connection" is not limited to direct connections and also encompasses indirect connections. Moreover, the term "connection" is not limited to fixing a plurality of independent members to each other, but also encompasses a plurality of portions in a single member being continuous. Additionally, the term "connection" is also used to mean that one member connects a plurality of other members to each other.

### Frame Portion

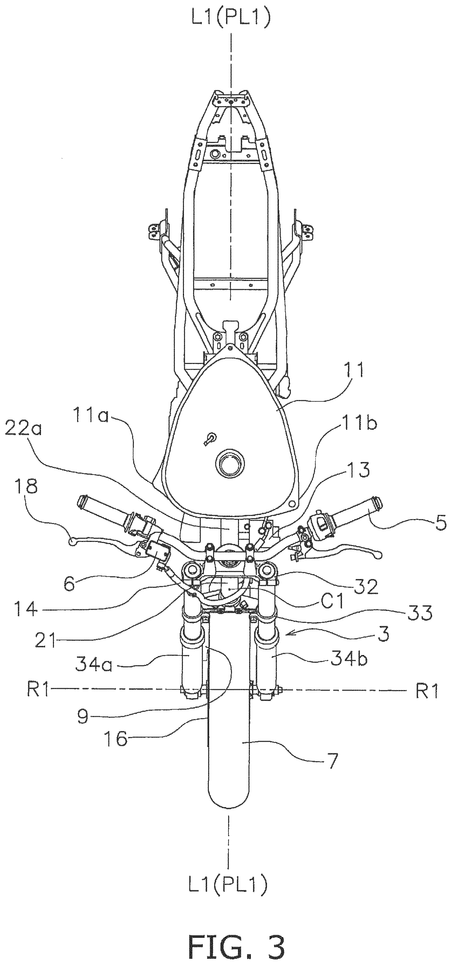

As illustrated in FIG. 2, the frame portion 2 includes a head pipe 21 and a frame body 22. As illustrated in FIG. 3, the head pipe 21 is disposed at a vehicle center C1 in the vehicle width direction. The head pipe 21 rotatably supports the steering device 3.

As illustrated in FIG. 3, the vehicle center C1 is defined by the center of the head pipe 21. As illustrated in FIG. 2, the vehicle center C1 is defined on a center line H1 of the head pipe 21. The center line H1 of the head pipe 21 passes through the center of the head pipe 21 and also extends along the head pipe 21. The vehicle center C1 may be at any point, provided that the point is on the center line H1 of the head pipe 21.

As illustrated in FIG. 2, the frame body 22 includes a main frame 22a and a down frame 22b. The frame body 22 further includes a cross member 22c. The frame body 22 is connected to the head pipe 21 and is provided rearward from the head pipe 21. In the present embodiment, the frame body 22 is integrally formed with the head pipe 21 and extends rearward from the head pipe 21.

The main frame 22a extends rearward from the head pipe 21. The down frame 22b extends downward from the head pipe 21. The down frame 22b is disposed downward from the main frame 22a. The cross member 22c connects the main frame 22a and the down frame 22b to each other.

### Steering Device

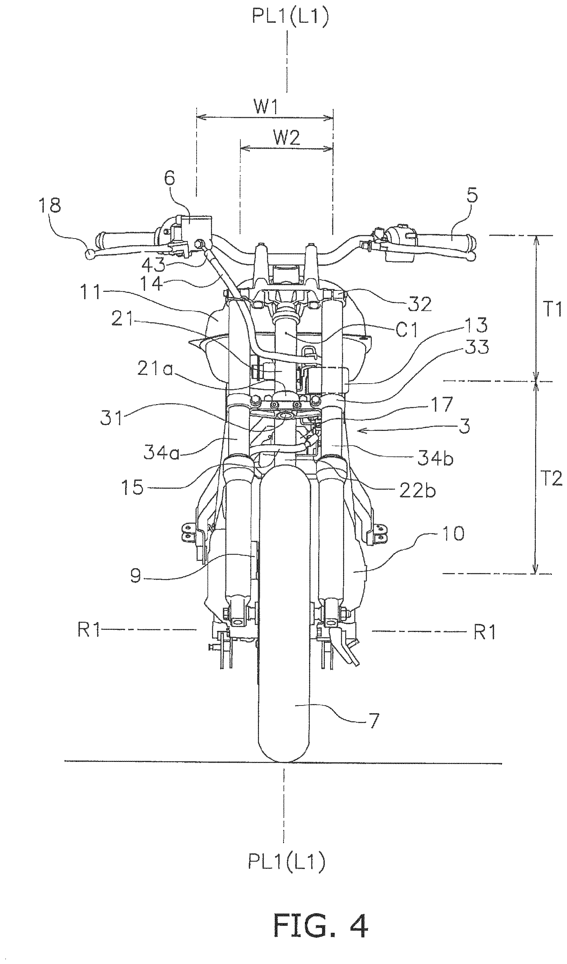

As illustrated in FIGS. 3 and 4, the steering device 3 is rotatably supported by the head pipe 21. The steering device 3 includes a steering shaft 31 (see FIG. 4), an upper bracket 32, an under bracket 33, and a pair of front suspensions 34a, 34b.

The steering shaft 31 is inserted into the head pipe 21 and is rotatably supported by the head pipe 21. The upper bracket 32 and the under bracket 33 are attached to the steering shaft 31.

The pair of front suspensions 34a, 34b rotatably supports the front wheel 7. The pair of front suspensions 34a, 34b is supported by the upper bracket 32 and the under bracket 33. In the vehicle side view, each of the pair of front suspensions 34a, 34b extends upward while inclining rearward with respect to a rotation center R1 of the front wheel 7 (see FIG. 2).

### Swing Arm

As illustrated in FIG. 1, the swing arm 4 rotatably supports the rear wheel 8. The swing arm 4 is rotatably supported by the engine 10 or the frame portion 2. In the present embodiment, the swing arm 4 is rotatably supported by the frame portion 2 (e.g., the frame body 22).

### Handle

As illustrated in FIGS. 2 and 4, the handle 5 is disposed upward from the head pipe 21. In one example, the handle 5 is disposed with a gap between the handle 5 and the upper end of the head pipe 21. The handle 5 is connected to the steering device 3. In one example, the handle 5 is connected to the upper portion of the steering shaft 31 via the upper bracket 32 so as to be integrally rotatable with the steering device 3.

### Master Cylinder

As illustrated in FIGS. 2, 3, and 4, the master cylinder 6 is supported by the handle 5. The upper hydraulic pipe 14 is connected to the master cylinder 6. The master cylinder 6 applies pressure to the brake fluid in the upper hydraulic pipe 14 in accordance with an amount of operation of a brake lever 18 (see FIGS. 3 and 4) that is mounted on the handle 5.

As illustrated in FIG. 3, in the vehicle plan view, the master cylinder 6 is disposed on the left side (example of the first side) or the right side (example of the second side) with respect to a vehicle center line L1 that passes through the vehicle center C1. The vehicle center line L1 is a straight line that passes through the vehicle center C1 and extends in the front-back direction or the up-down direction.

The disposal of the various components, which includes the master cylinder 6, may be defined using a vehicle center plane PL1. The vehicle center plane PL1 is a plane that passes through the vehicle center C1 and that extends in the front-back direction. The vehicle center place PL1 may be defined by a plane that passes through the vehicle center C1 and that extends in the up-down direction.

In the present embodiment, as illustrated in FIG. 3, in the vehicle plan view, the master cylinder 6 is disposed on the left side (the first side) with respect to the vehicle center line L1 (the vehicle center plane PL1). Specifically, the master cylinder 6 is attached to the left side of the handle 5 with respect to the vehicle center line L1 (the vehicle center plane PL1).

Additionally, as illustrated in FIG. 4, in the vehicle front view, the master cylinder 6 is disposed on the left side (the first side) with respect to the vehicle center plane PL1. Specifically, the master cylinder 6 is attached to the left side of the handle 5 with respect to the vehicle center plane PL1.

As illustrated in FIGS. 3 and 4, the vehicle center C1 corresponds to the center in the vehicle width direction. The vehicle width direction corresponds to a direction perpendicularly separating from the vehicle center line L1 or the vehicle center plane PL1 with respect to the vehicle center line L1 or the vehicle center plane PL1. For example, the vehicle width direction corresponds to the left-right direction.

As illustrated in FIG. 3, in the vehicle plan view, the vehicle center line L1 is defined by a straight line that passes through the vehicle center C1 (e.g., the center of the head pipe 21) and that extends in the front-back direction. As illustrated in FIGS. 3 and 4, in the vehicle front view, the vehicle center plane PL1 is defined by a plane that passes through the vehicle center C1 (e.g., the center of the head pipe 21) and that extends in the front-back direction.

### Front Wheel and Rear Wheel

As illustrated in FIG. 2, the front wheel 7 is rotatably supported by the steering device 3. Specifically, as illustrated in FIGS. 3 and 4, the front wheel 7 is rotatably supported by the pair of front suspensions 34a, 34b.

As illustrated in FIGS. 1 and 2, the front wheel 7 includes a brake disc 16 that is integrally rotatable with the front wheel 7. As illustrated in FIGS. 2 and 4, the front wheel 7 is disposed downward from the head pipe 21. In one example, the front wheel 7 is disposed with a gap between the front wheel 7 and a lower end 21a of the head pipe 21. The lower end 21a of the head pipe 21 is supported by the under bracket 33. An upper end (not illustrated in the drawings) of the head pipe 21 is supported by the upper bracket 32. As illustrated in FIG. 1, the rear wheel 8 is rotatably supported by the swing arm 4.

### Hydraulic Brake

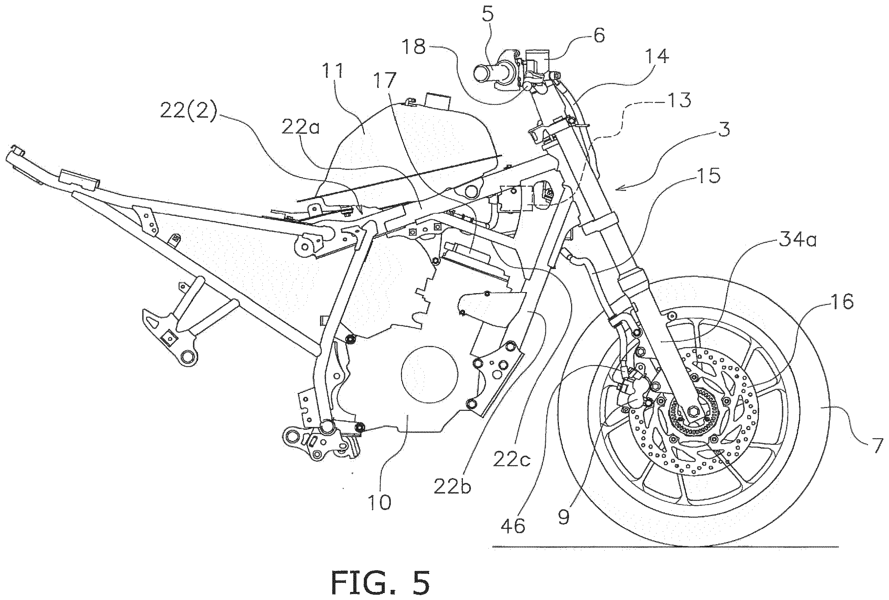

The hydraulic brake 9 is for braking the front wheel 7. As illustrated in FIG. 5, the lower hydraulic pipe 15 is connected to the hydraulic brake 9. Specifically, when the master cylinder 6 operates as a result of an operation of the brake lever 18, the pressure of the brake fluid is transferred to the hydraulic brake 9 via the upper hydraulic pipe 14 and the lower hydraulic pipe 15. The hydraulic brake 9 brakes the brake disc 16 of the front wheel 7 according to the pressure of the brake fluid.

As illustrated in FIG. 3, in the vehicle plan view, the hydraulic brake 9 is disposed on the left side (the first side) or the right side (the second side) of the front wheel 7 with respect to the vehicle center line L1 (the vehicle center plane PL1).

In the present embodiment, as illustrated in FIGS. 3 and 4, in the vehicle plan view and the vehicle front view, the hydraulic brake 9 is disposed on the left side of the front wheel 7 with respect to the vehicle center line L1 (the vehicle center plane PL1). In this state, as illustrated in FIG. 5, the hydraulic brake 9 is attached to the left side of the steeling device 3 (e.g., to the left side front suspension 34a).

### Engine and Fuel Tank

As illustrated in FIG. 2, the engine 10 is disposed downward from the fuel tank 11. The engine 10 is supported by the frame portion 2. Specifically, the engine 10 is attached to the frame body 22 (e.g., to the main frame 22a and the down frame 22b). A head cover 17 is attached to the upper portion of the engine 10.

The fuel tank 11 is disposed rearward from the head pipe 21. Additionally, the fuel tank 11 is disposed upward from the main frame 22a. Specifically, the fuel tank 11 is disposed with a gap between the fuel tank 11 and the head pipe 21 and is attached to the upper portion of the main frame 22a. As illustrated in FIG. 1, the seat 12 is disposed rearward from the fuel tank 11. The seat 12 is attached to the upper portion of the main frame 22a.

### ABS Unit

The ABS unit 13 is for controlling the front wheel hydraulic brake 9. In one example, when the front wheel 7 is locked, the ABS unit 13 controls the hydraulic brake 9 so as to automatically repeat releasing and actuation of the hydraulic brake 9, even when the brake lever 18 is squeezed. Note that, "ABS" is an abbreviation for "Anti-lock Brake System."

As illustrated in FIG. 2, the ABS unit 13 is attached to the frame portion 2 (e.g., to the frame body 22). In the present embodiment, the ABS unit 13 is attached to the main frame 22a. Specifically, the ABS unit 13 is mounted on the main frame 22a frontward from the fuel tank 11.

As illustrated in FIG. 3, in the vehicle plan view, the ABS unit 13 is disposed on the side opposite the hydraulic brake 9 with respect to the vehicle center line L1 (the vehicle center plane PL1). Additionally, as illustrated in FIG. 4, in the vehicle front view, the ABS unit 13 is disposed on the side opposite the hydraulic brake 9 with respect to the vehicle center plane PL1. In the present embodiment, as illustrated in FIGS. 3 and 4, in the vehicle front view and the vehicle plan view, the ABS unit 13 is disposed on the right side (the second side) with respect to the vehicle center line L1 (the vehicle center plane PL1).

Additionally, as illustrated in FIG. 3, in the vehicle plan view, the ABS unit 13 is disposed so as not to overlap with the fuel tank 11 and so as to be inward in the vehicle width direction from the outer end of the fuel tank 11. Specifically, in the vehicle plan view, the ABS unit 13 is disposed so as not to overlap with the fuel tank 11 and so as to be between a pair of outermost edge portions 11a, 11b, in the vehicle width direction, of the fuel tank 11.

Note that, in the present embodiment, an example of a case is described in which the entire ABS unit 13 does not overlap with the fuel tank 11 in the vehicle plan view. However, a portion of the ABS unit 13 may overlap with the fuel tank 11.

As illustrated in FIG. 2, in the vehicle side view, at least a portion of the ABS unit 13 is disposed between the head pipe 21 and the fuel tank 11. In the present embodiment, in the vehicle side view, the ABS unit 13 is disposed between the head pipe 21 and the fuel tank 11.

Note that, in the present embodiment, an example of a case is described in which, in the vehicle side view, the ABS unit 13 is disposed between the head pipe 21 and the fuel tank 11. However, a portion of the ABS unit 13 may be disposed between the head pipe 21 and the fuel tank 11, and the other portion of the ABS unit 13 may be disposed downward from the fuel tank 11.

Moreover, as illustrated in FIG. 2, in the vehicle side view, the ABS unit 13 is disposed downward from the main frame 22a, rearward from the down frame 22b, upward from the lower end 21a of the head pipe 21, and upward from the head cover 17 of the engine 10. Additionally, in the vehicle side view, the ABS unit 13 is disposed upward from a rear end of a top face of the under bracket 33, which is provided on the lower end 21a of the head pipe 21. The rear end is indicated by a black spot in FIG. 2.

Specifically, in the vehicle side view, the ABS unit 13 is disposed downward from an upper surface 22d of the main frame 22a, rearward from the down frame 22b, upward from the lower end 21a of the head pipe 21, and upward from the head cover 17 of the engine 10.

When the ABS unit 13 is disposed as described above, the ABS unit 13, the master cylinder 6, and the hydraulic brake 9 have the following positional relationships.

As illustrated in FIG. 4, in the vehicle front view, a first vehicle width gap W1 in the vehicle width direction between the ABS unit 13 and the master cylinder 6 is larger than a second vehicle width gap W2 in the vehicle width direction between the ABS unit 13 and the hydraulic brake 9. That is, the ABS unit 13, the master cylinder 6, and the hydraulic brake 9 are each individually attached to the frame portion 2 (the main frame 22a), the handle 5, and the steering device 3 (the front suspensions 34a, 34b) such that the first vehicle width gap W1 is larger than the second vehicle width gap W2.

Additionally, as illustrated in FIG. 4, a first height gap T1 in the vehicle height direction (up-down direction) between the ABS unit 13 and the master cylinder 6 is smaller than a second height gap T2 in the vehicle height direction between the ABS unit 13 and the hydraulic brake 9. That is, the ABS unit 13, the master cylinder 6, and the hydraulic brake 9 are each individually attached to the frame portion 2 (the main frame 22a), the handle 5, and the steering device 3 (the front suspensions 34a, 34b) such that the first height gap T1 is smaller than the second height gap T2.

Note that the first and second vehicle width gaps W1, W2 and the first and second height gaps T1, T2 are measured using the center of gravity of each of the ABS unit 13, the master cylinder 6, and the hydraulic brake 9 as reference points.

The ABS unit 13 disposed as described above has the following configuration.

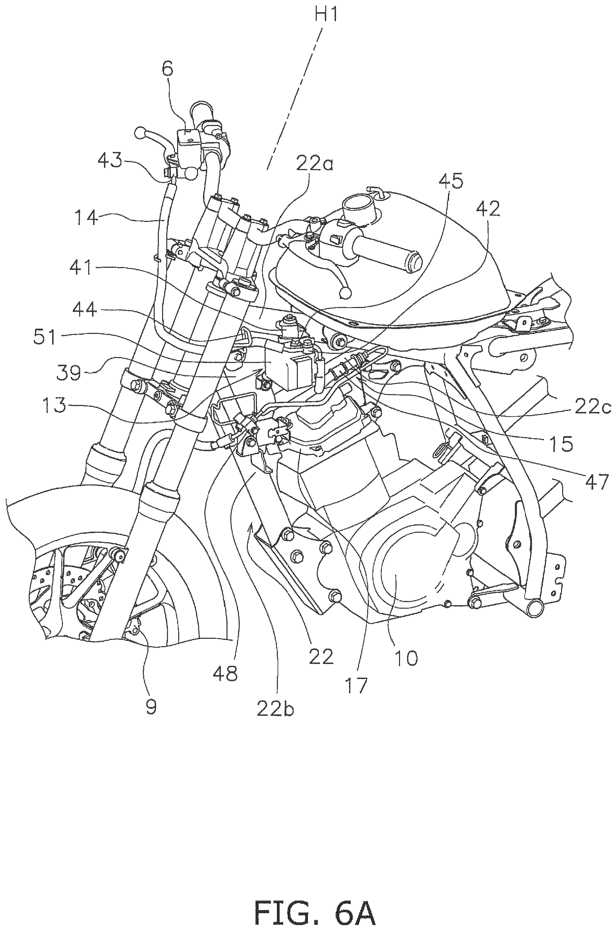

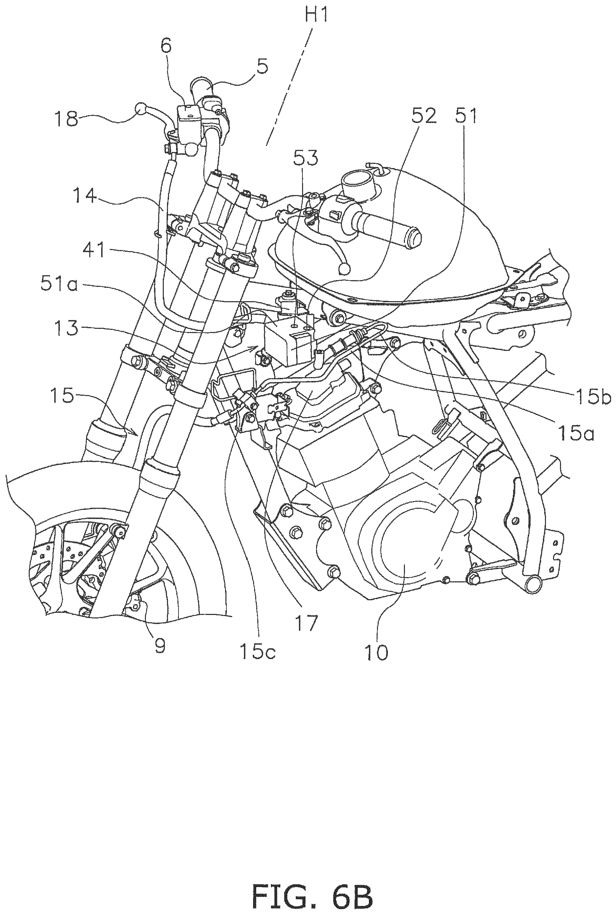

As illustrated in FIGS. 6A and 6B, the ABS unit 13 includes a first connected portion 52 (see FIG. 6B) to which the upper hydraulic pipe 14 connects, and a second connected portion 53 (see FIG. 6B) to which the lower hydraulic pipe 15 connects. Specifically, as illustrated in FIG. 6B, the ABS unit 13 includes a unit body 51, the first connected portion 52, and the second connected portion 53.

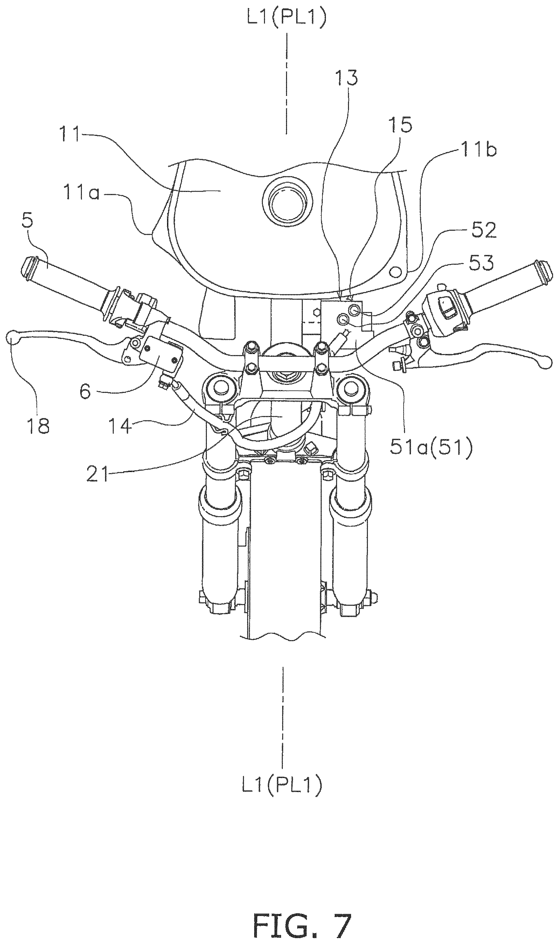

Note that a first connection member 42 (described later) for the upper hydraulic pipe and a second connection member 45 (described later) for the lower hydraulic pipe are not illustrated in FIGS. 6B and 7.

The unit body 51 houses an ABS module (not illustrated in the drawings) that functions as the control unit of the hydraulic brake 9. Additionally, the unit body 51 houses internal piping (not illustrated in the drawings).

The internal piping is connected to the first connected portion 52 and the second connected portion 53. The internal piping feeds the brake fluid from one of the upper hydraulic pipe 14 and the lower hydraulic pipe 15 to the other of the upper hydraulic pipe 14 and the lower hydraulic pipe 15. The ABS module and the internal piping are substantially the same as described in the related art and, as such, description thereof is foregone.

As illustrated in FIGS. 2 and 6A, the unit body 51 is attached to the frame portion 2 (e.g., the main frame 22a). In one example, the unit body 51 is attached to the main frame 22a frontward from the fuel tank 11. Specifically, the unit body 51 is attached to the main frame 22a via the first attachment member 41, between the head pipe 21 and the fuel tank 11.

Note that, in the present embodiment, in order to position the unit body 51, the unit body 51 is also attached to the main frame 22a and the down frame 22b that are downward from the fuel tank 11.

The disposal of the unit body 51 is the same as the disposal of the ABS unit 13 described above. That is, the disposal of the unit body 51 can be described by replacing the term "ABS unit 13" with the term "unit body 51" in the preceding description. As such, description of the disposal of the unit body 51 is foregone.

As illustrated in FIGS. 6A and 6B, the upper hydraulic pipe 14 is connected to the first connected portion 52. Specifically, the upper hydraulic pipe 14 connects the master cylinder 6 to the unit body 51 via the first connection member 42 (see FIG. 6A) and the first connected portion 52 (see FIG. 6B).

As illustrated in FIGS. 6A and 6B, the lower hydraulic pipe 15 is connected to the second connected portion 53. Specifically, the lower hydraulic pipe 15 connects the unit body 51 to the hydraulic brake 9 via the second connection member 45 (see FIG. 6A) and the second connected portion 53 (see FIG. 6B).

As illustrated in FIGS. 6B and 7, the first connected portion 52 and the second connected portion 53 are provided on an upper surface 51a of the ABS unit 13 (e.g., the upper surface 5 la of the unit body 51). As illustrated in FIG. 2, in the vehicle side view, the first connected portion 52 and the second connected portion 53 are disposed frontward from the fuel tank 11.

As illustrated in FIG. 7, in the vehicle plan view, the first connected portion 52 and the second connected portion 53 are disposed frontward from the fuel tank 11. Specifically, in the vehicle plan view, the first connected portion 52 and the second connected portion 53 are disposed between the fuel tank 11 and the head pipe 21.

More specifically, in the vehicle plan view, the first connected portion 52 is disposed more to the fuel tank 11 side than the second connected portion 53. Moreover, the first connected portion 52 is provided outward in the vehicle width direction from the second connected portion 53, with respect to the vehicle center line L1 (the vehicle center plane PL1). The second connected portion 53 is disposed frontward from the first connected portion 52 in a direction along the vehicle center line L1 (the vehicle center plane PL1). For example, the second connected portion 53 is disposed more to the head pipe 21 side than the first connected portion 52.

Additionally, in the vehicle plan view, the first connected portion 52 and the second connected portion 53 are disposed so as not to overlap with the fuel tank 11 and so as to be inward in the vehicle width direction from the outer end of the fuel tank 11. Specifically, in the vehicle plan view, the first connected portion 52 and the second connected portion 53 are disposed so as not to overlap with the fuel tank 11 and so as to be between the pair of outermost edge portions 11a, 11b, in the vehicle width direction, of the fuel tank 11.

### Upper Hydraulic Pipe

As illustrated in FIGS. 2 and 6A, the upper hydraulic pipe 14 is disposed between the ABS unit 13 and the master cylinder 6. The upper hydraulic pipe 14 connects the ABS unit 13 to the master cylinder 6. In other words, the ABS unit 13 and the master cylinder 6 are connected to each other via the upper hydraulic pipe 14. For example, the upper hydraulic pipe 14 is configured by a rubber tube through which the brake fluid flows.

As illustrated in FIG. 6A, a first end portion of the upper hydraulic pipe 14 is connected to the ABS unit 13 (the first connected portion 52 in FIG. 6B) via the first connection member 42. A second end portion of the upper hydraulic pipe 14 is connected to the master cylinder 6 via a third connection member 43. The upper hydraulic pipe 14 is routed as follows.

As illustrated in FIG. 2, the upper hydraulic pipe 14 extends frontward from the ABS unit 13. Then, as illustrated in FIG. 4, the upper hydraulic pipe 14 passes between the head pipe 21 and the steering device 3 on the side opposite the hydraulic brake 9, with respect to the vehicle center plane PL1 (the vehicle center line L1), and leads from the front of the head pipe 21 to the master cylinder 6.

Specifically, as illustrated in FIGS. 2 and 6A, the upper hydraulic pipe 14 extends frontward from the ABS unit 13. Then, as illustrated in FIGS. 4 and 6A, the upper hydraulic pipe 14 passes between the head pipe 21 and the right side front suspension 34b on the right side (the second side) with respect to the vehicle center plane PL1 (the vehicle center line LI), and leads from the front of the head pipe 21 to the master cylinder 6.

In the vehicle side view, the upper hydraulic pipe 14 that is routed in this manner is supported between the steering device 3 and the ABS unit 13 by the frame portion 2. Specifically, in the vehicle side view illustrated in FIG. 2, the upper hydraulic pipe 14 is supported between the right side front suspension 34b and the ABS unit 13 by a wall portion 39 (see FIG. 6A) of the frame portion 2 (e.g., between the main frame 22a and the down frame 22b) via a second attachment member 44 (see FIG. 6A).

### Lower Hydraulic Pipe

As illustrated in FIG. 2, the lower hydraulic pipe 15 is disposed between the ABS unit 13 and the hydraulic brake 9. The lower hydraulic pipe 15 connects the ABS unit 13 to the hydraulic brake 9. In other words, the ABS unit 13 and the hydraulic brake 9 are connected to each other via the lower hydraulic pipe 15.

As illustrated in FIG. 6A, a first end portion of the lower hydraulic pipe 15 is connected to the ABS unit 13 (the second connected portion 53 in FIG. 6B) via the second connection member 45. A second end portion of the lower hydraulic pipe 15 is attached to the hydraulic brake 9 via a fourth connection member 46 (see FIG. 5). The lower hydraulic pipe 15 is longer than the upper hydraulic pipe 14. The lower hydraulic pipe 15 is routed as follows.

As illustrated in FIG. 2, in the vehicle side view, the lower hydraulic pipe 15 extends downward from the second connected portion 53, rearward from the ABS unit 13, and frontward between the ABS unit 13 and the engine 10. Then, as illustrated in FIG. 4, in the vehicle front view, the lower hydraulic pipe 15 leads to the side (the left side) opposite the ABS unit 13 with respect to the vehicle center line L1 (the vehicle center plane PL1).

Specifically, as illustrated in FIGS. 2 and 6A, in the vehicle side view, the lower hydraulic pipe 15 extends downward from the upper surface 51a of the ABS unit 13 along the rear surface of the ABS unit 13, and extends rearward so as to separate from the ABS unit 13. Then, the lower hydraulic pipe 15 extends frontward toward the space between the ABS unit 13 and the head cover 17 of the engine 10, and passes between the ABS unit 13 and the head cover 17 of the engine 10. Thereafter, as illustrated in FIGS. 4 and 6A, in the vehicle front view, the lower hydraulic pipe 15 passes a front of the down frame 22b downward from the head pipe 21, and leads to the hydraulic brake 9 side (the first side) with respect to the vehicle center line L1 (the vehicle center plane PL1).

In the vehicle side view, the lower hydraulic pipe 15 that is routed in this manner is supported between the steering device 3 and the ABS unit 13 by the frame portion 2. Specifically, in the vehicle side view illustrated in FIG. 2, the lower hydraulic pipe 15 is supported by the frame portion 2 (e.g., the cross member 22c) via a third attachment member 47 (see FIG. 6A). Additionally, in the vehicle side view, the lower hydraulic pipe 15 is supported between the right side front suspension 34b and the ABS unit 13 by the frame portion 2 (e.g., the down frame 22b) via a fourth attachment member 48 (see FIG. 6A).

Here, at least a portion of the lower hydraulic pipe 15 is configured by a metal tube member 15a. In the present embodiment, as illustrated in FIG. 6B, a portion of the lower hydraulic pipe 15 is configured by the metal tube member 15a.

The lower hydraulic pipe 15 includes the metal tube member 15a, a first rubber tube 15b that connects the second connected portion 53 to the metal tube member 15a via the first connection member 42, and a second rubber tube 15c that connects the metal tube member 15a to the hydraulic brake 9 via the fourth connection member 46.

Examples of the metal tube member 15a include a steel pipe with copper plating on the inner surface. Using such a steel pipe as the metal tube member 15a makes it possible to prevent the occurrence of foreign matter in the piping passage between the master cylinder 6 and the hydraulic brake 9. Note that any material may be used for the tube member 15a, provided that the member is a metal tube member 15a with copper plating on the inner surface.

As illustrated in FIGS. 2 and 6B, in the vehicle side view, the metal tube member 15a is disposed between the ABS unit 13 and the down frame 22b. Additionally, the metal tube member 15a is disposed between the ABS unit 13 and the head cover 17 of the engine 10 on the ABS unit 13 side, with respect to the vehicle center line L1 (the vehicle center plane PL1).

As illustrated in FIG. 6B, the metal tube member 15a is disposed on the ABS unit 13 side, that is, on the side opposite the hydraulic brake 9, with respect to the vehicle center line L1 (the vehicle center plane PL1) illustrated in FIGS. 3 and 4. Specifically, the metal tube member 15a is disposed on the right side (the second side) with respect to the vehicle center line L1 (the vehicle center plane PL1).

As illustrated in FIG. 6B, a first end portion of the first rubber tube 15b is attached to the second connected portion 53 via the second connection member 45. A second end portion of the first rubber tube 15b is attached to a first end portion of the metal tube member 15a.

A first end portion of the second rubber tube 15c is attached to a second end portion of the metal tube member 15a. A second end portion of the second rubber tube 15c is attached to the hydraulic brake 9 via the fourth connection member 46. The brake fluid flows through the interior of each of the first rubber tube 15b, the metal tube member 15a, and the second rubber tube 15c.

Note that, in FIG. 6B, a protector for protecting the first rubber tube 15b and the second rubber tube 15c is mounted on the first rubber tube 15b and the second rubber tube 15c in the section where the first rubber tube 15b and the second rubber tube 15c are partially depicted by thick lines.

As illustrated in FIG. 6B, the first rubber tube 15b is disposed on the ABS unit 13 side, that is, on the side opposite the hydraulic brake 9, with respect to the vehicle center line L1 (the vehicle center plane PL1) illustrated in FIGS. 3 and 4. Specifically, the first rubber tube 15b is disposed on the right side (the second side) with respect to the vehicle center line L1 (the vehicle center plane PL1).

As illustrated in FIG. 6B, the second rubber tube 15c is disposed on both the ABS unit 13 side and the hydraulic brake 9 side with respect to the vehicle center line L1 (the vehicle center plane PL1) illustrated in FIGS. 3 and 4. Specifically, the second rubber tube 15c passes from the ABS unit 13 side (the second side) to a front of the down frame 22b, and leads to the hydraulic brake 9 side (the first side).

### Conclusions

According to the straddled vehicle 1 having the configuration described above, in the vehicle side view, the ABS unit 13 is disposed downward from the main frame 22a, rearward from the down frame 22b, upward from the lower end 21a of the head pipe 21, and upward from the head cover 17 of the engine 10. In this state, the first connected portion 52 and the second connected portion 53 are disposed frontward from the fuel tank 11 on the upper surface 51a of the ABS unit 13.

As a result, it is possible to access the ABS unit 13 without removing the fuel tank 11. Therefore, the maintainability of the ABS unit can be improved. Additionally, the upper hydraulic pipe 14 and the lower hydraulic pipe 15 can easily be removed from the ABS unit 13. Therefore, it is possible to simultaneously improve the maintainability of the upper hydraulic pipe 14 and the lower hydraulic pipe 15. Furthermore, since the ABS unit 13 is disposed upward from the head cover 17 of the engine 10, it is possible to reduce the influence of heat transfer from the engine 10 to the ABS unit 13.

Additionally, in the vehicle plan view, the ABS unit 13 is disposed on the side opposite the hydraulic brake 9 with respect to the vehicle center line L1. As a result, the lower hydraulic pipe 15 can be curved between the ABS unit 13 and the hydraulic brake 9. As such, the length for the lower hydraulic pipe 15 to conform to the stroke of the steering device 3 and the curvature necessary for the lower hydraulic pipe 15 to conform to the rotation of the front wheel 7 at a time of handle 5 operation can be secured.

Additionally, since the lower hydraulic pipe 15 includes the metal tube member 15a, it is possible to prevent the crystallization of the brake fluid. That is, it is possible to prevent the occurrence of foreign matter in the piping passage between the master cylinder 6 and the hydraulic brake 9.

Moreover, in the vehicle side view, the metal tube member 15a is disposed between the ABS unit 13 and the down frame 22b. As such, the lower hydraulic pipe 15 can be freely routed from the down frame 22b to the hydraulic brake 9. As a result, it is possible to secure the length for the lower hydraulic pipe 15 to conform to the stroke of the steering device 3 and the curvature necessary for the lower hydraulic pipe 15 to conform to the rotation of the front wheel 7 at a time of handle 5 operation, while preventing the occurrence of the foreign matter described above.

### INDUSTRIAL APPLICABILITY

According to the present invention, the maintainability of the ABS unit 13 in the straddled vehicle 1 can be improved. Additionally, according to the present invention, the upper hydraulic pipe 14 and the lower hydraulic pipe 15 can be suitably routed. Furthermore, according to the present invention, the occurrence of foreign matter in the piping passage between the master cylinder 6 and the hydraulic brake 9 can be prevented.

## Claims

1. A straddled vehicle (1), comprising:
a frame portion (2) including a head pipe (21) disposed at a vehicle center (C1) in a vehicle width direction, a main frame (22a) extending rearward from the head pipe (21), and a down frame (22b) disposed downward from the main frame (22a) and extending downward from the head pipe (21);
a steering device (3) rotatably supported by the head pipe (21);
a handle (5) disposed upward from head pipe (21) and connected to the steering device (3);
a master cylinder (6) supported by the handle (5) and disposed on a first side or on a second side opposite the first side with respect to a vehicle center line (L1) that passes through the vehicle center (C1) in a vehicle plan view;
a front wheel (7) disposed downward from the head pipe (21) and rotatably supported by the steering device (3);
a hydraulic brake (9) disposed on the first side or the second side of the front wheel (7) with respect to the vehicle center line (L1) in the vehicle plan view;
an engine (10) supported by the frame portion (2);
a fuel tank (11) disposed upward from the main frame (22a);
an ABS unit (13) configured to control the hydraulic brake (9);
an upper hydraulic pipe (14) connecting the ABS unit (13) to the master cylinder (6);
a lower hydraulic pipe (15) connecting the ABS unit (13) to the hydraulic brake (9); and
a seat (12) disposed rearward from the fuel tank (11),
**characterized by** the entire ABS unit (13) being disposed on a side opposite the hydraulic brake (9) with respect to the vehicle center line (L1) in the vehicle plan view;
the ABS unit (13) being disposed downward from the main frame (22a), rearward from the down frame (22b), upward from a lower end (21a) of the head pipe (21), and upward from a head cover (17) of the engine (10) in a vehicle side view;
the ABS unit (13) including a first connected portion (52) to which the upper hydraulic pipe (14) connects, and a second connected portion (53) to which the lower hydraulic pipe (15) connects,
the first connected portion (52) and the second connected portion (53) being provided on an upper surface (51a) of the ABS unit (13) and being disposed frontward from the fuel tank (11) in the vehicle plan view,
the upper hydraulic pipe (14) extending frontward from the ABS unit (13), passing between the head pipe (21) and the steering device (3) on the side opposite the hydraulic brake (9) with respect to the vehicle center line (L1), and leading from a front of the head pipe (21) to the master cylinder (6),
at least a portion of the lower hydraulic pipe (15) being configured by a metal tube member (15a) and,
the tube member being disposed between the ABS unit (13) and a front edge of the down frame (22b) in the vehicle side view.

2. The straddled vehicle (1) according to claim 1, wherein
the ABS unit (13) is disposed upward from a rear end of a top face of an under bracket (33) which is provided on a lower end (21a) of the head pipe (21) in the vehicle side view.

3. The straddled vehicle (1) according to claim 1 or 2, wherein
the lower hydraulic pipe (15) is longer than the upper hydraulic pipe (14).

4. The straddled vehicle (1) according to any one of claims 1 to 3, wherein
the ABS unit (13) is disposed so as not to overlap with the fuel tank (11) and so as to be disposed inward from an outer end of the fuel tank (11) in the vehicle width direction in the vehicle plan view.

5. The straddled vehicle (1) according to any one of claims 1 to 3, wherein
the ABS unit (13) is disposed such that a portion of the ABS unit (13) overlaps with the fuel tank (11) in the vehicle plan view and the ABS unit (13) is disposed inward from an outer end of the fuel tank (11) in the vehicle width direction.

6. The straddled vehicle (1) according to any one of claims 1 to 5, wherein
the ABS unit (13) is mounted on the main frame (22a) in front of the fuel tank (11).

7. The straddled vehicle (1) according to any one of claims 1 to 6, wherein
at least a portion of the ABS unit (13) is disposed between the head pipe (21) and the fuel tank (11) in the vehicle side view.

8. The straddled vehicle (1) according to any one of claims 1 to 7, wherein
a gap which is provided between the ABS unit (13) and the master cylinder (6) in the vehicle width direction is larger than a gap which is provided between the ABS unit (13) and the hydraulic brake (9) in the vehicle width direction, in a vehicle front view.

9. The straddled vehicle (1) according to any one of claims 1 to 8, wherein
a gap which is provided between the ABS unit (13) and the master cylinder (6) is smaller than a gap which is provided between the ABS unit (13) and the hydraulic brake (9) in a vehicle height direction.

10. The straddled vehicle (1) according to any one of claims 1 to 9, wherein
the upper hydraulic pipe (14) is configured by a rubber tube.

11. The straddled vehicle (1) according to any one of claims 1 to 10, wherein
the upper hydraulic pipe (14) is supported between the steering device (3) and the ABS unit (13) by the frame portion (2).

12. The straddled vehicle (1) according to any one of claims 1 to 11, wherein
the lower hydraulic pipe (15) includes the tube member (15a), a first rubber tube (15b) which connects the second connected portion (53) to the tube member (15a), and a second rubber tube (15c) which connects the tube member to the hydraulic brake (9).

13. The straddled vehicle (1) according to any one of claims 1 to 12, wherein
the lower hydraulic pipe (15) extends downward from the second connected portion (53), rearward from the ABS unit (13), and frontward between the ABS unit (13) and the engine (10), in the vehicle side view.

14. The straddled vehicle (1) according to any one of claims 1 to 13, wherein
the frame portion (2) further includes a cross member (22c) which connects the main frame (22a) to the down frame (22b).

## Patentansprüche

1. Ein Grätschsitzfahrzeug (1), umfassend:
einen Rahmenabschnitt (2), der ein Kopfrohr (21), das an einer Fahrzeugmitte (C1) in einer Fahrzeugbreitenrichtung angeordnet ist, einen Hauptrahmen (22a), der sich rückwärts von dem Kopfrohr (21) erstreckt, und einen Abwärtsrahmen (22b) beinhaltet, der abwärts von dem Hauptrahmen (22a) angeordnet ist und sich abwärts von dem Kopfrohr (21) erstreckt;
eine Lenkeinrichtung (3), die von dem Kopfrohr (21) drehbar gelagert ist;
einen Griff (5), der aufwärts von dem Kopfrohr (21) angeordnet ist und mit der Lenkeinrichtung (3) verbunden ist;
einen Masterzylinder (6), der von dem Griff (5) gestützt wird und auf einer ersten Seite oder auf einer zweiten Seite gegenüberliegend der ersten Seite bezüglich einer Fahrzeugmittellinie (L1), die durch die Fahrzeugmitte (C1) in einer Fahrzeugdraufsicht verläuft, angeordnet ist;
ein Vorderrad (7), das abwärts von dem Kopfrohr (21) angeordnet ist und drehbar von der Lenkeinrichtung (3) gelagert wird;
eine hydraulische Bremse (9), die auf der ersten Seite oder der zweiten Seite des Vorderrads (7) bezüglich der Fahrzeugmittellinie (L1) in der Fahrzeugdraufsicht angeordnet ist;
einen Motor (10), der von dem Rahmenabschnitt (2) gestützt wird;
einen Kraftstofftank (11), der aufwärts von dem Hauptrahmen (22a) angeordnet ist;
eine ABS-Einheit (13), die konfiguriert ist, die hydraulische Bremse (9) zu steuern;
ein oberes hydraulisches Rohr (14), das die ABS-Einheit (13) mit dem Masterzylinder (6) verbindet;
ein unteres hydraulisches Rohr (15), das die ABS-Einheit (13) mit der hydraulischen Bremse (9) verbindet; und
einen Sitz (12), der rückwärts von dem Kraftstofftank (11) angeordnet ist,
**dadurch gekennzeichnet, dass** die gesamte ABS-Einheit (13) auf einer der hydraulischen Bremse (9) bezüglich der Fahrzeugmittellinie (L1) in der Fahrzeugdraufsicht gegenüberliegenden Seite angeordnet ist;
die ABS-Einheit (13) abwärts von dem Hauptrahmen (22a), rückwärts von dem Abwärtsrahmen (22b), aufwärts von einem unteren Ende (21a) des Kopfrohrs (21) und aufwärts von einer Kopfabdeckung (17) des Motors (10) in einer Fahrzeugseitenansicht angeordnet ist;
die ABS-Einheit (13) einen ersten verbundenen Abschnitt (52), mit dem das obere hydraulische Rohr (14) verbindet, und einen zweiten verbundenen Abschnitt (53) beinhaltet, mit dem das untere Rohe (15) verbindet,
der erste verbundene Abschnitt (52) und der zweite verbundene Abschnitt (53) auf einer oberen Fläche (51a) der ABS-Einheit (13) vorgesehen sind und vorwärts von dem Kraftstofftank (11) in der Fahrzeugdraufsicht angeordnet sind,
sich das obere hydraulische Rohr (14) vorwärts von der ABS-Einheit (13) erstreckt, zwischen dem Kopfrohr (21) und der Lenkeinrichtung (3) auf der der hydraulischen Bremse (9) bezüglich der Fahrzeugmittellinie (L1) gegenüberliegenden Seite verläuft und von einer Vorderseite des Kopfrohrs (21) zu dem Masterzylinder (6) führt,
zumindest ein Abschnitt des unteren hydraulischen Rohrs (15) durch ein Metallrohrelement (15a) konfiguriert ist, und
das Rohrelement zwischen der ABS-Einheit (13) und einem vorderen Rand des Abwärtsrahmen (22b) in der Fahrzeugseitenansicht angeordnet ist.

2. Das Grätschsitzfahrzeug (1) nach Anspruch 1, wobei
die ABS-Einheit (13) aufwärts von einem hinteren Ende einer oberen Fläche einer unteren Klammer (33), die an einem unteren Ende (21a) des Kopfrohrs (21) in der Fahrzeugseitenansicht vorgesehen ist, angeordnet ist.

3. Das Grätschsitzfahrzeug (1) nach Anspruch 1 oder 2, wobei
das untere hydraulische Rohr (15) länger als das obere hydraulische Rohr (14) ist.

4. Das Grätschsitzfahrzeug (1) nach irgendeinem von Ansprüchen 1 bis 3, wobei
die ABS-Einheit (13) so angeordnet ist, dass sie nicht mit dem Kraftstofftank (11) überlappt und dass sie innerhalb von einem äußeren Ende des Kraftstofftanks (11) in der Fahrzeugbreitenrichtung in der Fahrzeugdraufsicht angeordnet ist.

5. Das Grätschsitzfahrzeug (1) nach irgendeinem von Ansprüchen 1 bis 3, wobei
die ABS-Einheit (13) so angeordnet ist, dass ein Abschnitt der ABS-Einheit (13) mit dem Kraftstofftank (11) in der Fahrzeugdraufsicht überlappt und die ABS-Einheit (13) innerhalb von einem äußeren Ende des Kraftstofftanks (11) in der Fahrzeugbreitenrichtung angeordnet ist.

6. Das Grätschsitzfahrzeug (1) nach irgendeinem von Ansprüchen 1 bis 5, wobei
die ABS-Einheit (13) an dem Hauptrahmen (22a) vor dem Kraftstofftank (11) montiert ist.

7. Das Grätschsitzfahrzeug (1) nach irgendeinem von Ansprüchen 1 bis 6, wobei
zumindest ein Abschnitt der ABS-Einheit (13) zwischen dem Kopfrohr (21) und dem Kraftstofftank (11) in der Fahrzeugseitenansicht angeordnet ist.

8. Das Grätschsitzfahrzeug (1) nach irgendeinem von Ansprüchen 1 bis 7, wobei
ein Spalt, der zwischen der ABS-Einheit (13) und dem Masterzylinder (6) in der Fahrzeugbreitenrichtung vorgesehen ist, breiter ist als ein Spalt, der zwischen der ABS-Einheit (13) und der hydraulischen Bremse (9) in der Fahrzeugbreitenrichtung vorgesehen ist, in einer Fahrzeugvorderansicht.

9. Das Grätschsitzfahrzeug (1) nach irgendeinem von Ansprüchen 1 bis 8, wobei
ein Spalt, der zwischen der ABS-Einheit (13) und dem Masterzylinder (6) vorgesehen ist, schmaler ist als ein Spalt, der zwischen der ABS-Einheit (13) und der hydraulischen Bremse (9) in einer Fahrzeughöhenrichtung.

10. Das Grätschsitzfahrzeug (1) nach irgendeinem von Ansprüchen 1 bis 9, wobei
das obere hydraulische Rohr (14) durch ein Gummirohr konfiguriert ist.

11. Das Grätschsitzfahrzeug (1) nach irgendeinem von Ansprüchen 1 bis 10, wobei
das obere hydraulische Rohr (14) zwischen der Lenkeinrichtung (3) und der ABS-Einheit (13) durch den Rahmenabschnitt (2) gestützt wird.

12. Das Grätschsitzfahrzeug (1) nach irgendeinem von Ansprüchen 1 bis 11, wobei
das untere hydraulische Rohr (15) das Rohrelement (15a), ein erstes Gummirohr (15b), das den zweiten verbundenen Abschnitt (53) mit dem Rohrelement (15a) verbindet, und ein zweites Gummirohr (15c) beinhaltet, das das Rohrelement mit der hydraulischen Bremse (9) verbindet.

13. Das Grätschsitzfahrzeug (1) nach irgendeinem von Ansprüchen 1 bis 12, wobei
sich das untere hydraulische Rohr (15) abwärts von dem zweiten verbundenen Abschnitt (53), rückwärts von der ABS-Einheit (13) und vorwärts zwischen der ABS-Einheit (13) und dem Motor (10) in der Fahrzeugseitenansicht erstreckt.

14. Das Grätschsitzfahrzeug (1) nach irgendeinem von Ansprüchen 1 bis 13, wobei
der Rahmenabschnitt (2) weiterhin ein Querelement (22c) beinhaltet, das den Hauptrahmen (22a) mit dem Abwärtsrahmen (22b) verbindet.

## Revendications

1. Véhicule à selle (1) comprenant :
un cadre (2) incluant un tube de fourche (21) disposé au centre du véhicule (C1) dans la direction de la largeur du véhicule, un cadre principal (22a) s'étendant vers l'arrière depuis le tube de fourche (21), ainsi qu'un cadre inférieur (22b) disposé vers le bas par rapport au cadre principal (22a) et s'étendant vers le bas depuis le tube de fourche (21),
un dispositif de conduite (3) supporté par le tube de fourche (21) tout en pouvant tourner,
un guidon (5) disposé au-dessus du tube de fourche (21) et relié au dispositif de conduite (3),
un maître cylindre (6) supporté par le guidon (5) et disposé sur un premier côté ou sur un second côté opposé au premier côté par rapport à l'axe central du véhicule (L1) qui traverse le centre du véhicule (C1) dans une vue en plan du véhicule,
une roue avant (7) disposé en dessous du tube de fourche (21) et supportée par le dispositif de conduite (3) tout en pouvant tourner,
un frein hydraulique (9) disposé sur le premier côté ou sur le second côté de la roue avant (7) par rapport à l'axe central du véhicule (L1) dans la vue en plan du véhicule,
un moteur thermique (10) supporté par le cadre (2),
un réservoir de carburant (11) disposé au-dessus du cadre principal (22a),
une unité du système de freinage ABS (13) configurée pour commander le frein hydraulique (9),
une conduite hydraulique supérieure (14) reliant l'unité ABS (13) au maître cylindre (6),
une conduite hydraulique inférieure (15) reliant l'unité ABS (13) au frein hydraulique (9), et
un siège (12) disposé à l'arrière du réservoir de carburant (11),
**caractérisé en ce que** l'unité ABS (13) dans sa totalité est disposée sur le côté opposé au frein hydraulique (9) par rapport à l'axe central du véhicule (L1) dans la vue en plan du véhicule,
l'unité ABS (13) étant disposée en dessous du cadre principal (22a), à l'arrière du cadre inférieur (22b), au-dessus de l'extrémité inférieure (21a) du tube de fourche (21) et au-dessus du couvre culasse (17) du moteur (10) dans une vue latérale du véhicule,
l'unité ABS (13) incluant un premier organe de raccordement (52) auquel se relie la conduite hydraulique supérieure (14), ainsi qu'un second organe de raccordement (53) auquel se relie la conduite hydraulique inférieure (15),
le premier organe de raccordement (52) et le second organe de raccordement (53) étant disposés sur la surface supérieure (51a) de l'unité ABS (13) et étant disposés à l'avant du réservoir de carburant (11) dans la vue en plan du véhicule,
la conduite hydraulique supérieure (14) s'étendant vers l'avant depuis l'unité ABS (13), passant entre le tube de fourche (21) et le dispositif de conduite (3) sur le côté opposé du frein hydraulique (9) par rapport à l'axe central du véhicule (L1) et conduisant depuis l'avant du tube de fourche (21) jusqu'au maître cylindre (6),
au moins une partie de la conduite hydraulique inférieure (15) étant configurée avec un élément de tube métallique (15a), et
l'élément tubulaire étant disposé entre l'unité ABS (13) et la limite avant du cadre inférieur (22b) dans la vue latérale du véhicule.

2. Véhicule à selle (1) selon la revendication 1, dans lequel :
l'unité ABS (13) est disposée au-dessus de l'extrémité arrière de la face supérieure d'un support inférieur (33) qui est disposé sur l'extrémité inférieure (21a) du tube de fourche (21) dans la vue latérale du véhicule.

3. Véhicule à selle (1) selon la revendication 1 ou la revendication 2, dans lequel :
la conduite hydraulique inférieure (15) est plus longue que la conduite hydraulique supérieure (14).

4. Véhicule à selle (1) selon l'une quelconque des revendications 1 à 3, dans lequel :
l'unité ABS (13) est disposée de sorte à ne pas chevaucher le réservoir de carburant (11) et de sorte à être disposée vers l'intérieur depuis l'extrémité externe du réservoir de carburant (11) dans la direction de la largeur du véhicule selon la vue en plan du véhicule.

5. Véhicule à selle (1) selon l'une quelconque des revendications 1 à 3, dans lequel :
l'unité ABS (13) est disposée de sorte à ce qu'une partie de l'unité ABS (13) chevauche le réservoir de carburant (11) dans la vue en plan du véhicule, et l'unité ABS (13) est disposée vers l'intérieur depuis l'extrémité externe du réservoir de carburant (11) dans la direction de la largeur du véhicule.

6. Véhicule à selle (1) selon l'une quelconque des revendications 1 à 5, dans lequel :
l'unité ABS (13) est montée sur le cadre principal (22a) en face du réservoir de carburant (11).

7. Véhicule à selle (1) selon l'une quelconque des revendications 1 à 6, dans lequel :
au moins une partie de l'unité ABS (13) est disposée entre le tube de fourche (21) et le réservoir de carburant (11) dans la vue latérale du véhicule.

8. Véhicule à selle (1) selon l'une quelconque des revendications 1 à 7, dans lequel :
l'intervalle qui est ménagé entre l'unité ABS (13) et le maître cylindre (6) dans la direction de la largeur du véhicule est plus grand que l'intervalle qui est ménagé entre l'unité ABS (13) et le frein hydraulique (9) dans la direction de la largeur du véhicule, selon une vue avant du véhicule.

9. Véhicule à selle (1) selon l'une quelconque des revendications 1 à 8, dans lequel :
l'intervalle qui est ménagé entre l'unité ABS (13) et le maître cylindre (6) est plus petit que l'intervalle qui est ménagé entre l'unité ABS (13) et le frein hydraulique (9) dans la direction de la hauteur du véhicule.

10. Véhicule à selle (1) selon l'une quelconque des revendications 1 à 9, dans lequel :
la conduite hydraulique supérieure (14) est configurée avec un tube de caoutchouc.

11. Véhicule à selle (1) selon l'une quelconque des revendications 1 à 10, dans lequel :
la conduite hydraulique supérieure (14) est supportée entre le dispositif de conduite (3) et l'unité ABS (13) par le cadre (2).

12. Véhicule à selle (1) selon l'une quelconque des revendications 1 à 11, dans lequel :
la conduite hydraulique inférieure (15) inclut l'élément tubulaire (15a), un premier tube de caoutchouc (15b) qui relie le second organe de raccordement (53) à l'élément tubulaire (15a), ainsi qu'un second tube de caoutchouc (15c) qui relie l'élément de tube au frein hydraulique (9).

13. Véhicule à selle (1) selon l'une quelconque des revendications 1 à 12, dans lequel :
la conduite hydraulique inférieure (15) s'étend vers le bas depuis le second organe de raccordement (53) vers l'arrière depuis l'unité ABS (13) et vers l'avant entre l'unité ABS (13) et le moteur (10) dans la vue latérale du véhicule.

14. Véhicule à selle (1) selon l'une quelconque des revendications 1 à 13, dans lequel :
le cadre (2) inclut en outre un élément transversal (22c) qui relie le cadre principal (22a) au cadre inférieur (22b) .
